# EUROPÄISCHE PATENTANMELDUNG

(11) **EP 2 945 039 A1**
(43) Veröffentlichungstag der Anmeldung: **18.11.2015**
(21) Anmeldenummer: 14167928.2
(22) Anmeldetag: 12.05.2014
(51) Int. Cl.: G06F 1/16, G02F 1/1333, H02B 1/06

(54) **Flachbildschirmrahmen**

(71) Anmelder: Siemens Aktiengesellschaft, 80333 München (DE)
(72) Erfinder: Daubenmerkl, Christian, 92256 Hahnbach (DE); Hummel, Alfredo, 93133 Burglengenfeld (DE); Krieger, Harald, 91284 Neuhaus (DE); Schlichting, Heinrich, 93173 Wenzenbach (DE); Traub, Andreas, 92224 Amberg (DE)

(57) **Zusammenfassung**

Die Erfindung betrifft einen Flachbildschirmrahmen (1) mit einer Einfassung (2) ausgestaltet zur Aufnahme einer flächigen Anzeigeeinheit (3), welche seitliche Kanten (3a,3b,3c,3d) und eine Vorder- und Rückseite (4,5) aufweist, wobei innerhalb der Einfassung (2) erste, ein elastisches Element (6) aufweisende Haltemittel (10), für die Anzeigeeinheit (3) angeordnet sind, die ersten Haltemittel (10) sind dabei derart ausgestaltet, dass bei in die Einfassung (2) eingesetzter Anzeigeeinheit (3) ein Druck auf die seitlichen Kanten (3a,3b,3c,3d) der flächigen Anzeigeeinheit (3) ausgeübt wird, wobei an je einem ersten Haltemittel (10) ein zweites Haltemittel (20) angeordnet ist, das zweite Haltemittel (20) ist dabei derart ausgestaltet, dass bei in die Einfassung (2) eingesetzter Anzeigeeinheit (3) ein Druck auf die Rückseite (5) der Anzeigeeinheit (3) ausgeübt wird.

## Beschreibung

Die Erfindung betrifft einen Flachbildschirmrahmen mit einer Einfassung ausgestaltet zur Aufnahme einer flächigen Anzeigeeinheit, welche seitliche Kanten und eine Vorder- und Rückseite aufweist.

Eine Befestigung und Positionierung von Displays in Anzeigeund Bediengeräten (z.B. HMI-Panels für den industriellen Einsatz) erfordert einen großen konstruktiven Aufwand, wobei es für unterschiedliche Displaygrößen/Displayhersteller unterschiedliche konstruktive Lösungen gibt. Außerdem werden Displays zunehmend schmaler, was zur Folge hat, dass Befestigungsmöglichkeiten am Display, wie z.B. Schraubdome, zunehmend entfallen. Aufgrund des Wegfalls von Befestigungsmöglichkeiten am Display wird eine genaue Positionierung des Displays im Gerät zunehmend schwieriger. Erschwerend kommen unterschiedliche Toleranzfelder der Außenmaße einzelner Displaygrößen hinzu. Es ist von Nachteil, dass für jede Displaygröße unterschiedlicher Displayhersteller eine eigene konstruktive Lösung gefunden werden muss, um das Display zu befestigen, zu positionieren und mit einer Leiterplatte elektrisch leitend zu verbinden.

Es ist Aufgabe der vorliegenden Erfindung das Befestigen von Displays oder generell Anzeigeelementen in einem elektrischen Gerät zu erleichtern.

Die Aufgabe wird durch einen Flachbildschirmrahmen gelöst, wobei der Flachbildschirmrahmen mit einer Einfassung ausgestaltet ist zur Aufnahme einer flächigen Anzeigeeinheit, welche seitliche Kanten und eine Vorder- und Rückseite aufweist, wobei innerhalb der Einfassung erste ein elastisches Element aufweisende Haltemittel für die Anzeigeeinheit angeordnet sind, die ersten Haltemittel sind dabei derart ausgestaltet, dass bei in die Einfassung eingesetzter Anzeigeeinheit ein Druck auf die seitlichen Kanten der flächigen Anzeigeeinheit ausgeübt wird, wobei an je einem ersten Haltemittel ein zweites Haltemittel angeordnet ist, dass zweite Haltemittel ist dabei derart ausgestaltet, dass bei in die Einfassung eingesetzte Anzeigeeinheit ein Druck auf die Rückseite der Anzeigeeinheit ausgeübt wird. Mit dem ersten und zweiten Haltemitteln werden gleichzeitig ein Zentrieren und ein Halten des Displays in der Einfassung des Flachbildschirmrahmens ermöglicht.

Die ersten Haltemittel wirken auf die seitlichen Kanten und ermöglichen eine Positionierung, Befestigung und einen Ausgleich von Toleranzen von unterschiedlichen Displaygrößen. Die zweiten Haltemittel sorgen für einen festen Halt.

In einer weiteren verbesserten Ausgestaltung der Erfindung weisen die ersten Haltemittel einen ersten Schenkel und einen zweiten Schenkel auf, welche im wesentlichen rechtwinklig zueinander angeordnet sind, wobei die ersten Haltemittel mit ihren Schenkeln in einer Ausnehmung innerhalb einer Innenseite der Einfassung angeordnet sind. Bei der rechtwinkligen Ausgestaltung der ersten Haltemittel mit einem ersten Schenkel und einem zweiten Schenkel können diese Haltemittel mit Vorteil in den Ecken der Einfassung des Flachbildschirmrahmens angeordnet werden.

Mit Vorteil ist das elastische Element als eine Flachformfeder ausgestaltet.

Eine Weiterbildung des Flachbildschirmrahmens sieht vor, dass die Schenkel der ersten Haltemittel l-förmig ausgestaltet sind und ein erster Anteil des ersten l-förmigen Schenkels mit einem ersten Anteil des zweiten l-förmigen Schenkels verbunden ist, wobei ein zweiter Anteil des ersten l-förmigen Schenkels bzw. des zweiten l-förmigen Schenkels die Flachformfeder bildet.

Bei der Anordnung mit zwei l-förmigen Schenkeln, welche rechteckig zueinander angeordnet sind, ist die Flachformfeder als eine erste Lasche und eine zweite Lasche ausgebildet, wobei die erste Lasche und die zweite Lasche mit ihren jeweiligen ersten Enden an einem Entspringungsort spitzwinklig zueinander an den zweiten Anteil des jeweiligen l-förmigen Schenkels angeordnet ist. Spitzwinklig im Sinne der Anordnung der Laschen meint, dass vom Entspringungsort zu ihrem jeweiligen zweiten Ende ein Abstand der Laschen zueinander zunimmt.

Weiterhin ist vorgesehen, dass an dem zweiten Schenkel Befestigungsmittel angeordnet sind, welche derart ausgestaltet sind, dass es an einem Gegenbefestigungsmittel, welches in der Einfassung eingearbeitet ist, befestigt ist.

Nach einer Weiterbildung des Flachbildschirmrahmens ist das zweite Haltemittel als ein Federband ausgestaltet und am Gegenbefestigungsmittel angeordnet. Das zweite Haltemittel ist dabei derart ausgestaltet, dass es bei in die Einfassung eingesetzte Anzeigeeinheit ein Druck auf die Rückseite der Anzeigeeinheit ausübt und diese in der Einfassung sicher hält.

Um die Anforderungen an die EMV Verträglichkeit von Industriegeräten zu erreichen, sollte das Display bzw. die Anzeigeeinheit mit einer Leiterplatte elektrisch leitend verbunden sein. Dies wird dadurch erreicht, dass das zweite Haltemittel den elektrischen Strom leitet und die Rückseite der Anzeigeeinheit elektrisch kontaktiert, wobei über Bolzen, welche in den Gegenbefestigungsmitteln angeordnet sind, parallel zur Rückseite der Anzeigeeinheit eine Leiterplatte angeordnet ist, wobei die Leiterplatte einen umlaufenden Massering aufweist, welcher über das zweite Haltemittel mit den Bolzen elektrisch verbunden ist. Durch diese Maßnahme wird eine elektrische Störaussendung des Displays bzw. eine Einkopplung von EMV Störungen in das Display minimiert.

Mit Vorteil ist das erste Haltemittel als ein erstes Stanzbiegeteil und ein zweites Stanzbiegeteil ausgestaltet, wobei die beiden Stanzbiegeteile nahezu deckungsgleich aufeinander geschoben angeordnet sind. Die beiden aufeinander geschobenen oder gestapelten Stanzbiegeteile haben den Vorteil, dass die Federkräfte der an den einzelnen Stanzbiegeteilen angeordneten Laschen sich ergänzen und verstärken.

In der Zeichnung ist ein Ausführungsbeispiel des erfindungsgemäßen Flachbildschirmrahmens näher beschrieben. Es zeigt
- FIG 1: eine Explosionszeichnung des Flachbildschirmrahmens mit einem Display und einer Leiterplatte,
- FIG 2: eine Ecke des Flachbildschirmrahmens zur Darstellung einer Ecke der Einfassung mit eingesetzten, ersten und zweiten Haltemitteln,
- FIG 3: das erste und zweite Haltemittel als Einzeldarstellung,
- FIG 4: eine Ecke des Flachbildschirmrahmens und der Einfassung mit einem eingearbeiteten Gegenbefestigungsmittel,
- FIG 5: das erste Haltemittel als Einzeldarstellung mit seinen Formfedern und
- FIG 6: das erste Haltemittel in einer Explosionszeichnung, wodurch sichtbar wird, dass das erste Haltemittel aus zwei einzelnen Stanzbiegeteilen zusammengesetzt ist.

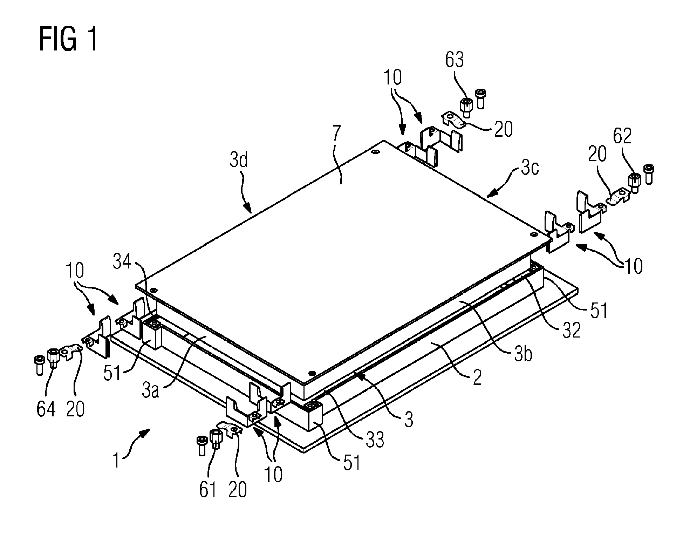

Gemäß der FIG 1 ist ein Flachbildschirmrahmen 1 mit einer Einfassung 2 ausgestaltet zur Aufnahme einer flächigen Anzeigeeinheit 3 dargestellt. Die flächige Anzeigeeinheit 3, beispielsweise ein LCD-Display, weist eine erste seitliche Kante 3a, eine zweite seitliche Kante 3b, eine dritte seitliche Kante 3c und eine vierte seitliche Kante 3d und eine Vorderseite 4 und eine Rückseite 5 auf. Innerhalb der Einfassung 2 sind elastische Elemente aufweisende Haltemittel 10 für die Anzeigeeinheit 3 angeordnet. Die ersten Haltemittel 10 sind dabei derart ausgestaltet, dass bei in die Einfassung 2 eingesetzte Anzeigeeinheit 3 ein Druck auf die seitlichen Kanten 3a,3b,3c,3d der flächigen Anzeigeeinheit 3 ausgeübt wird. Dieser Druck dient dem Zentrieren und Positionieren der Anzeigeeinheit 3 innerhalb der Einfassung 2. Insbesondere bei toleranzbehafteten Anzeigeeinheiten, bei welchen die Maße nicht immer 100% gleich sind, bietet diese Art der Zentrierung einen vorteilhaften Toleranzausgleich.

Um die Anzeigeeinheit 3 der Einfassung 2 sicher zu halten, sind an je einem ersten Haltemittel 10 je ein zweites Haltemittel 20 angeordnet. Das zweite Haltemittel 20 ist dabei derart ausgestaltet, dass bei in die Einfassung 2 eingesetzter Anzeigeeinheit 3 ein Druck auf die Rückseite 5 der Anzeigeeinheit 3 ausgeübt wird. Durch die ersten und zweiten Haltemittel 10,20 erfolgt eine Positionierung, Befestigung und ein Ausgleich von Toleranzen, wie sie bei unterschiedlichen Anzeigeeinheiten vorkommen können, der Toleranzausglich wird dabei vorteilhaft durch den Einsatz von Federn realisiert.

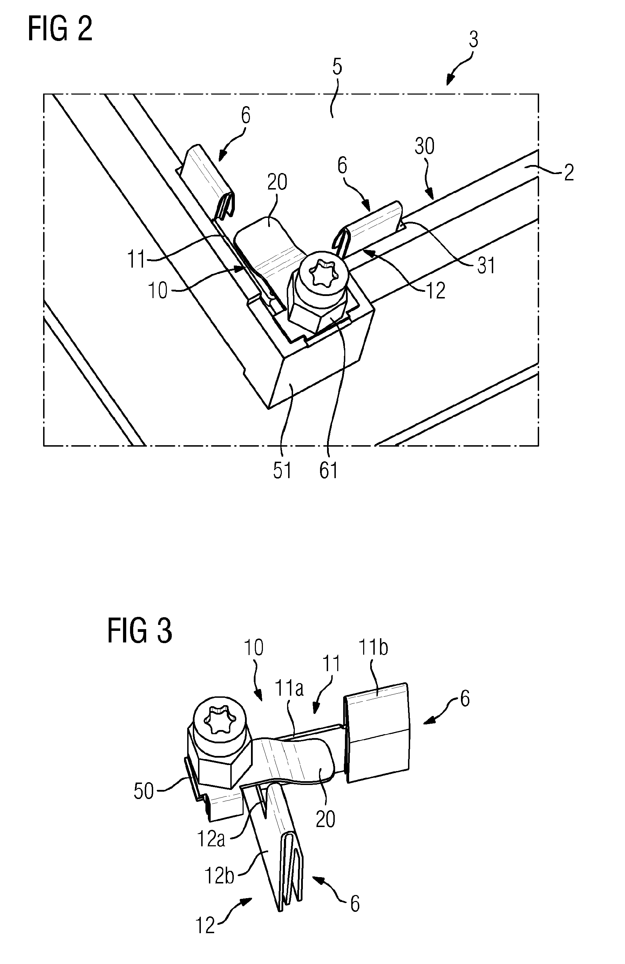

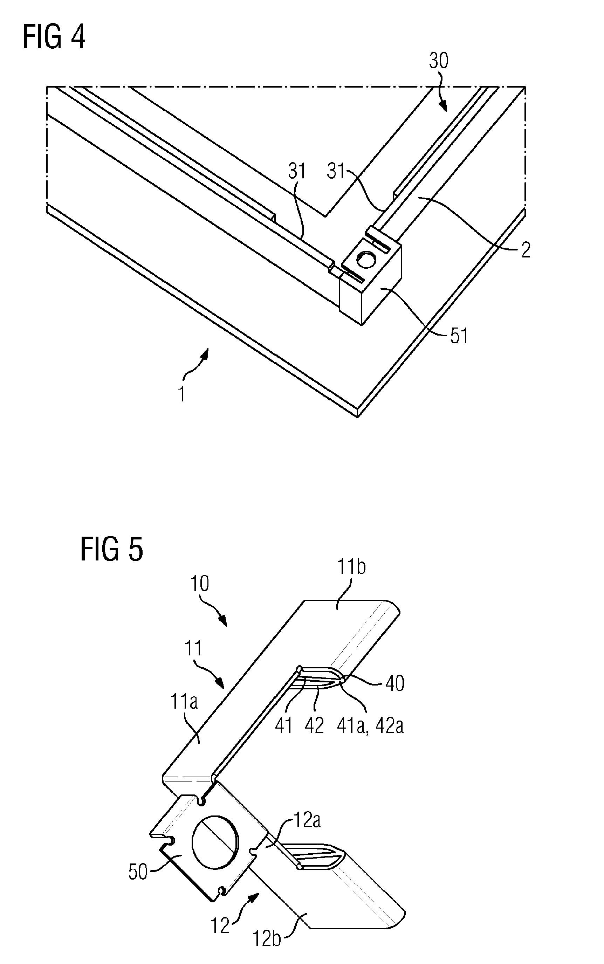

Eine elektrische Kontaktierung zwischen der Anzeigeeinheit 3 und der Leiterplatte 7 wird mit einem ersten Bolzen 61, einem zweiten Bolzen 62, einem dritten Bolzen 63 und einem vierten Bolzen 64 realisiert, wobei durch die Bolzen 61,62,63,64 zudem die ersten Haltemittel 10 und zweiten Haltemittel 20 in Position gehalten werden. Über in die Bolzen einschraubbare Schrauben wird die Leiterplatte 7 an den Bolzen 61,62,63,64 befestigt und es wird aufgrund der Stromleitfähigkeit der zweiten Haltemittel 20 die Anzeigeeinheit 3 durch die zweiten Haltemittel 20 elektrisch kontaktiert, wobei über die Bolzen 61,62,63,64, welche in den Gegenbefestigungsmitteln 51 angeordnet sind, die parallel zur Rückseite 5 der Anzeigeeinheit 3 angeordnete Leiterplatte 7 elektrisch kontaktiert, wobei die Leiterplatte 7 einen umlaufenden Massering aufweist. Gemäß der FIG 2 ist das erste Haltemittel 10 und das zweite Haltemittel 20 in einer Ecke der Einfassung 2, welche wiederum in einer Ecke des Flachbildschirmrahmens 1 angeordnet ist, dargestellt. Die Einfassung 2 weist im Bereich der Ecke ein Gegenbefestigungsmittel 51 auf. In das Gegenbefestigungsmittel 51 kann das Befestigungsmittel 50 des ersten Haltemittels 10 (siehe FIG 5) eingerastet werden. Das erste Haltemittel 10 weist einen ersten Schenkel 11 und einen zweiten Schenkel 12 auf, welche im Wesentlichen rechtwinklig zueinander angeordnet sind, wobei das erste Haltemittel 10 mit seinen Schenkeln 11,12 in einer Ausnehmung 31 innerhalb einer Innenseite 30 der Einfassung 2 angeordnet ist.

Zum Positionieren der Anzeigeeinheit 3 weist das erste Haltemittel 10 elastische Elemente 6 auf. Mit einem ersten Bolzen 61 ist das zweite Haltemittel 20 und das erste Haltemittel 10 in dem Gegenbefestigungsmittel 51 innerhalb der Einfassung 2 befestigt. Das zweite Haltemittel 20 ist dabei als eine gebogene Flachformfeder ausgestaltet, vorzugsweise ist diese gebogene Flachformfeder aus einem Federband hergestellt. Das zweite Haltemittel 20 ist dabei derart gebogen, dass bei in die Einfassung 2 eingesetzte Anzeigeeinheit 3 ein Druck auf die Rückseite 5 der Anzeigeeinheit 3 ausgeübt wird.

Zur weiteren Verdeutlichung der Ausgestaltung des ersten Haltemittels 10 ist gemäß FIG 3 das erste Haltemittel 10 perspektivisch dargestellt. Das erste Haltemittel 10 weist einen ersten Schenkel 11 und einen zweiten Schenkel 12 auf, welche im Wesentlichen rechtwinklig zueinander angeordnet sind. Die Schenkel 11,12 des ersten Haltemittels 10 sind l-förmig ausgestaltet. Ein erster Anteil 11a des ersten l-förmigen Schenkels 11 ist mit einem ersten Anteil 12a des zweiten l-förmigen Schenkels 12 verbunden, wodurch eine rechtwinklige Anordnung gebildet wird. Ein zweiter Anteil 11b, 12b des ersten l-förmigen Schenkels 11 bzw. des zweiten l-förmigen Schenkels 12 bildet die Flachformfeder und ist jeweils an dem gegenüberliegenden Ende des ersten Anteils 11a,12a der jeweiligen Schenkel angeordnet.

Zur Befestigung weist das erste Haltemittel 10 ein Befestigungsmittel 50 auf. Das Befestigungsmittel 50 des Haltemittels 10 rastet in ein Gegenbefestigungsmittel 51 gemäß FIG 4 ein. Das Gegenbefestigungsmittel 51 gemäß FIG 4 ist an einer Ecke der Einfassung 2 innerhalb einer Ausformung 31 für das erste Haltemittel 10 angeordnet.

Analog zu FIG 3 ist in einer weiteren Darstellung gemäß FIG 5 das Haltemittel 10 in einer anderen perspektivischen Darstellung abgebildet. Ein erster Schenkel 11 und ein zweiter Schenkel 12 sind rechtwinklig zueinander angeordnet. Ein erster Anteil 11a des ersten l-förmig ausgestalteten Schenkels 11 ist an einem ersten Anteil 12a des l-förmig ausgestalteten zweiten Schenkel 12 angeordnet. Der erste Anteil 12a des zweiten Schenkels 12 trägt dabei zusätzlich rechtwinklig abgewinkelt das Befestigungsmittel 50. Um eine l-Form der ersten und zweiten Schenkel 11,12 zu erreichen, sind jeweils an dem ersten Anteil 11a des ersten Schenkels 11 bzw. an den ersten Anteil 12a des zweiten Schenkels 12 zweite Anteile 11b,12b angeordnet. Die zweiten Anteile 11b,12b des ersten l-förmigen Schenkels 11 bzw. des zweiten l-förmigen Schenkels 12 sind dabei als eine Flachformfeder ausgestaltet. Die jeweilige Flachformfeder kann zusätzlich als eine erste Lasche 41 und eine zweite Lasche 42 ausgebildet, wobei die erste Lasche 41 und die zweite Lasche 42 mit ihren jeweiligen ersten Enden 41a,42a an einem Entspringungsort 40 spitzwinklig zueinander an den zweiten Anteil 11b,12b des jeweiligen l-förmigen Schenkels 11,12 angeordnet sind.

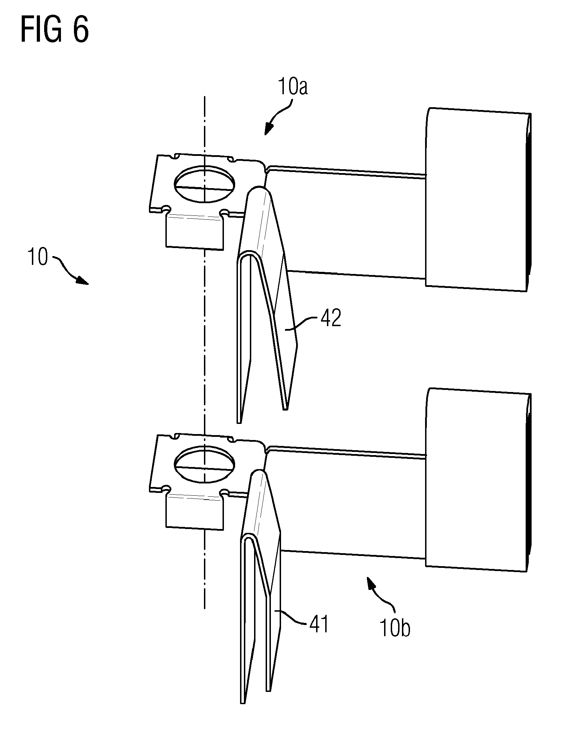

Mit der FIG 6 ist das erste Haltemittel 10 in einer möglichen Ausgestaltung als eine Explosionszeichnung des ersten Haltemittels 10 dargestellt. Mit dieser Darstellung wird klar, dass das erste Haltemittel 10 auch als ein erstes Stanzbiegeteil 10a und ein zweites Stanzbiegeteil 10b ausgestaltet sein kann, wobei die beiden Stanzbiegeteile 10a,10b nahezu deckungsgleich aufeinander geschoben angeordnet sind. Durch diese gestapelte Anordnung der beiden Stanzbiegeteile 10a,10b ergänzen sich die Federkräfte und verstärken sich. Eine weitere Verstärkung der Federkräfte wird dadurch erreicht, dass die erste Lasche 41 weiter nach innen gebogen ist als die zweite Lasche 42.

## Patentansprüche

1. Flachbildschirmrahmen (1) mit einer Einfassung (2) ausgestaltet zur Aufnahme einer flächigen Anzeigeeinheit (3), welche seitliche Kanten (3a,3b,3c,3d) und eine Vorder- und Rückseite (4,5) aufweist, wobei innerhalb der Einfassung (2) erste, ein elastisches Element (6) aufweisende Haltemittel (10), für die Anzeigeeinheit (3) angeordnet sind, die ersten Haltemittel (10) sind dabei derart ausgestaltet, dass bei in die Einfassung (2) eingesetzter Anzeigeeinheit (3) ein Druck auf die seitlichen Kanten (3a,3b,3c,3d) der flächigen Anzeigeeinheit (3) ausgeübt wird, wobei an je einem ersten Haltemittel (10) ein zweites Haltemittel (20) angeordnet ist, das zweite Haltemittel (20) ist dabei derart ausgestaltet, dass bei in die Einfassung (2) eingesetzter Anzeigeeinheit (3) ein Druck auf die Rückseite (5) der Anzeigeeinheit (3) ausgeübt wird.

2. Flachbildschirmrahmen (1) nach Anspruch 1, wobei die ersten Haltemittel (10) einen ersten Schenkel (11) und einen zweiten Schenkel (12) aufweisen, welche im Wesentlichen rechtwinkelig zueinander angeordnet sind, wobei die ersten Haltemittel (10) mit ihren Schenkeln (11,12) in einer Ausnehmung (31,32,33,34) innerhalb einer Innenseite (30) der Einfassung (2) angeordnet sind.

3. Flachbildschirmrahmen (1) nach einem der Ansprüche 1 bis 2, wobei das elastische Element (6) als eine Flachformfeder ausgestaltet ist.

4. Flachbildschirmrahmen (1) nach Anspruch 3, wobei die Schenkel (11,12) der ersten Haltemittel (10) l-förmig ausgestaltet sind und
- ein erster Anteil (11a) des ersten l-förmigen Schenkels (11) mit einem ersten Anteil (12a) des zweiten l-förmigen Schenkels (12) verbunden ist, wobei
- ein zweiter Anteil (11b) des ersten l-förmigen Schenkels (11) bzw. des zweiten l-förmigen Schenkels (12) die die Flachformfeder bildet.

5. Flachbildschirmrahmen (1) nach Anspruch 4, wobei die Flachformfeder als eine erste Lasche (41) und eine zweite Lasche (42) ausgebildet ist, wobei die erste Lasche (41) und die zweite Lasche (42) mit ihren jeweiligen ersten Enden (41a,42a) an einem Entspringungsort (40) spitzwinkelig zueinander an den zweiten Anteil (11b,12b) des jeweiligen l-förmigen Schenkels (11,12)angeordnet ist.

6. Flachbildschirmrahmen (1) nach einem der Ansprüche 2 bis 5, wobei an dem zweiten Schenkel (12) Befestigungsmittel (50) angeordnet sind, welche derart ausgestaltet sind, dass es an einem Gegenbefestigungsmittel (51), welches in der Einfassung (2) eingearbeitet ist, befestigt sind.

7. Flachbildschirmrahmen (1) nach Anspruch 6, wobei das zweite Haltemittel (20) als ein Federband ausgestaltet ist und am Gegenbefestigungsmittel (51) angeordnet ist.

8. Flachbildschirmrahmen (1) nach Anspruch 6, wobei das zweite Haltemittel (20) den elektrischen Strom leitet und die Rückseite (5) der Anzeigeeinheit (3) elektrisch kontaktiert, wobei über Bolzen (61,62,63,64), welche in den Gegenbefestigungsmitteln (51) angeordnet sind, parallel zur Rückseite (5) der Anzeigeeinheit (3) eine Leiterplatte (7) angeordnet ist, wobei die Leiterplatte (7) einen umlaufenden Massering aufweist, welcher mit den Bolzen (61,62,63,64) elektrisch verbunden ist.

9. Flachbildschirmrahmen (1) nach einem der Ansprüche 2 bis 7, wobei das erste Haltemittel (10) als ein erstes Stanzbiegeteil (10a) und ein zweites Stanzbiegeteil (10b) ausgestaltet ist, wobei die beiden Stanzbiegeteile (10a,10b) nahezu deckungsgleich aufeinander geschoben angeordnet sind.
